# EUROPEAN PATENT APPLICATION

(11) **EP 4 227 803 A1**
(43) Date of publication of application: **16.08.2023**
(21) Application number: 21884452.0
(22) Date of filing: 24.06.2021
(51) Int. Cl.: G06F 9/448

(54) **PROGRAM EXECUTION METHOD, PROGRAM PROCESSING METHOD, AND RELATED DEVICE**

(30) Priority: 31.10.2020 CN 202011198663
(71) Applicant: Huawei Technologies Co., Ltd., Shenzhen, Guangdong 518129 (CN)
(72) Inventor: LIU, Jianping, Shenzhen, Guangdong 518129 (CN); DAI, Lei, Shenzhen, Guangdong 518129 (CN); ZHONG, Jubin, Shenzhen, Guangdong 518129 (CN)
(74) Representative: Goddar, Heinz J.
(86) International application number: PCT/CN2021/101965
(87) International publication number: WO 2022/088711

(57) **Abstract**

This application discloses a program execution method, which may be applied to the field of program processing. The method includes: receiving a call request of a first program for a small stub function; loading the small stub function based on the call request; and determining, based on the small stub function, whether to load a complementary real function corresponding to the small stub function. A function that may actually need to be called by the first program is the complementary real function, and the small stub function may be understood as a buffer for loading the complementary real function. Whether to load the complementary real function can be controlled through addition of the buffer, so that a requirement of the first program for a running memory can be reduced.

## Description

This application claims priority to Chinese Patent Application No. 202011198663.0, filed with the China National Intellectual Property Administration on October 31, 2020 and entitled "PROGRAM EXECUTION METHOD, PROGRAM PROCESSING METHOD, AND RELATED DEVICE", which is incorporated herein by reference in its entirety.

### TECHNICAL FIELD

This application relates to the field of program processing, and in particular, to a program execution method, a program processing method, and a related device.

### BACKGROUND

A technology of "a miniaturized operating system (Operating System, OS)-complementary OS" is used in the industry, to simplify occupation of a device memory of a software system in a computer system. The miniaturized OS is also referred to as a small image, and the complementary OS is also referred to as a complementary image.

The small image and complementary image technology is a process in which a computer device generates the small image and the complementary image based on source code and a process in which the small image and the complementary image are used. A specific generation manner is as follows. First, the computer device distinguishes between a function set B in the source code that has a dependency with an entry point of a program, and a function set A in the source code that has no dependency with the entry point. The computer device deletes a function in the function set A from the source code, and retains a function in the function set B to obtain the small image. The computer device retains the function in the function set A from the source code, and replaces the function in the function set B with a null (null) function to obtain the complementary image. The function in the function set A in the complementary image is referred to as a real function. The null function set in the complementary image corresponds to the function set B in the small image, or functions in the null function set in the complementary image one-to-one correspond to functions in the function set B in the small image. The small image is a static link, and the complementary image is a dynamic link. When code in a third-party program includes a function in the complementary image and when the third-party program is started, a first device loads the function to a running memory in advance, and waits for the function to be executed.

The running memory of the first device is usually limited. If the code in the third-party program calls excessive functions, the running memory may be insufficient; consequently, the third-party program fails to run.

### SUMMARY

This application provides a program execution method, a program processing method, and related devices to reduce a requirement of a first program for a running memory.

A first aspect of this application provides a program execution method, applied to a computer system, where the computer system includes a first small image. The method may be performed by the computer system, or may be performed by a first device on which the computer system is installed. The following uses an example in which the method may be performed by the first device for description.

The method includes: The first device receives a call request of a first program for a small stub function, where the small stub function is a function in a small stub function set, and the first small image includes the small stub function set and a small real function set; loads the small stub function based on the call request; and determines, based on the small stub function, whether to load a complementary real function corresponding to the small stub function, where the complementary real function is a function in a complementary real function set, a first complementary image includes the complementary real function set and a complementary stub function set, the complementary stub function set corresponds to the small real function set, and the complementary real function set corresponds to the small stub function set.

A function that may actually need to be called by the first program is the complementary real function, and the small stub function may be understood as a buffer for loading the complementary real function. Whether to load the complementary real function can be controlled through addition of the buffer, so that a requirement of the first program for a running memory can be reduced. For example, when a related function corresponding to the complementary real function is not enabled in the first program, the complementary real function is not loaded.

According to the first aspect of this application, in a first implementation of the first aspect of this application, the first device attempts to run the small stub function according to an instruction of the first program, and if detecting an exception, loads the complementary real function. When the first program needs to enable the related function corresponding to the complementary real function, the first device may receive the instruction of the first program. It should be noted that the instruction may be specifically a change of a judgment variable that affects a program process in code (or a function called by the code) of the first program, and the change of the judgment variable triggers running of the small stub function. After triggering the small stub function, the first device attempts to run the small stub function. The attempt means that the first device is not necessarily capable of running the small stub function, and may only have an intent of attempting to run the small stub function. For example, the first device obtains an address of the small stub function, and is partially ready to run the small stub function. By detecting the exception, the first device may know that the first program is to start the related function corresponding to the complementary real function, and further load the complementary real function. Conversely, before detecting the exception, the first device may not need to load the complementary real function. In brief, in this application, loading of the complementary real function is triggered by detecting the related exception of the small stub function. When the exception is detected, it indicates that running of the small stub function is not completed successfully. In this case, the first program does not continue to be executed because execution of the small stub function is completed. Therefore, in this application, not only the buffer is added for loading the complementary real function, but also the first program is suspended. This provides a time basis for loading the complementary real function, reduces errors that may occur in the first program, and improves user experience.

According to the first aspect of this application or the first implementation of the first aspect, in a second implementation of the first aspect of this application, the small real function set is a set of functions that are run by using target code in a process of running a target case set, and the complementary real function set is a set of functions that are not run by using the target code in the process of running the target case set. A small image and a complementary image that are obtained based on the small real function set and the complementary real function set are referred to as a small image and a complementary image that are obtained based on a coverage rate. A small image and a complementary image that are obtained based on the function set B and the function set A in the background are referred to as a small image and a complementary image that are obtained based on a dependency rate. In some scenarios, a small real function set in the small image obtained based on the coverage rate is less than the function set B in the small image obtained based on the dependency rate. A smaller range of the small real function set indicates a smaller quantity of functions directly loaded by the first program. This further reduces the requirement of the first program for the running memory. Direct loading refers to loading without using the small stub function. For ease of description, a function loaded by using the small stub function is referred to as an indirectly loaded function. The indirectly loaded function is not directly loaded to the running memory of the first device, but the first device loads the function to the running memory only when the first program enables a function related to the function. If not starting the function related to the function, the first device may not load the function. In brief, a range of functions that are directly loaded is narrowed, and a range of functions that are indirectly loaded is widened.

According to the second implementation of the first aspect of this application, in a third implementation of the first aspect of this application, the method further includes: The first device loads a target function. The target function includes a target character string, a data volume of the target character string is less than a data volume of a source character string, the target code includes the target function, the target code is obtained based on source code, the source code includes a source function, and the source function includes the source character string. The source function corresponds to the target function. The correspondence herein means that the source function and the target function have a same capability of processing character strings, but specifically process two different character strings: the target character string and the source character string. In a plurality of scenarios, a user does not need to read, by using the first device, source character strings such as log data of a washing machine or an alarm log of UE. When functions corresponding to the source character strings are loaded, the source character strings are also loaded to the running memory, and consequently occupy the running memory of the first device. In this application, the source character string is processed by using an "ID-based" method. In this way, the requirement for the running memory of the first device can be reduced, security of the source character string is improved, and the source character string is not easily read by a malicious attacker.

According to the third implementation of the first aspect of this application, in a fourth implementation of the first aspect of this application, after the first device loads the target function, the method further includes: The first device sends the target character string to a second device, where the target character string is used by the second device to obtain the source character string based on a target correspondence and the target character string. Restoring the source character string by using the target character string can facilitate reading and improve user experience.

It should be noted that, for ease of description, the second device appears in a plurality of implementations of the first aspect of this application. The second device is one or more second devices different from the first device. In other words, second devices in different implementations may be a same computer device, or may be different computer devices.

According to any one of the first implementation to the fourth implementation of the first aspect of this application, in a fifth implementation of the first aspect of this application, the first device loads the complementary real function from the second device based on the small stub function. The first complementary image is stored in the second device, so that a requirement for storage space of the first device can be reduced. When the second implementation is referenced in the fifth implementation, compared with the small image obtained based on the dependency rate, the small image obtained based on the coverage rate usually has a smaller size or a smaller data volume. Therefore, the requirement for the storage space of the first device can be further reduced. In addition, the coverage rate is obtained based on the target case set. The target case set is properly set, so that a function commonly used by the first device may be in the first small image, and a function not commonly used may be in the first complementary image. Therefore, a proper compromise can be made between reducing a data transmission amount and reducing the requirement for the memory of the first device. The data transmission amount is a data volume of the complementary real function sent by the second device to the first device. Therefore, a combination of a distributed scenario, and the small image and the complementary image that are obtained based on the coverage rate has a greater advantage than a combination of the small image and the complementary image that are obtained based on the dependency rate.

According to any one of the first aspect of this application, or the first implementation to the fourth implementation of the first aspect, in a sixth implementation of the first aspect of this application, the first complementary image and the first small image are stored in different storage media of the first device. When the sixth implementation is referenced in the second implementation, it can be learned from the foregoing description of the fifth implementation that the first small image includes the function commonly used by the first device, and the first complementary image includes the function not commonly used by the first device. Therefore, a requirement of the first device for the first small image is different from a requirement for the first complementary image, for example, a read frequency or a read speed. Therefore, storing the first complementary image and the first small image in different storage media, for example, storage media with different costs, can reduce costs of the first device.

According to any one of the first aspect of this application, or the first implementation to the sixth implementation of the first aspect, in a seventh implementation of the first aspect of this application, if determining, based on the small stub function, to load the complementary real function, the first device sends related information of the complementary real function to the second device, where the related information is used by the second device to obtain a second small image based on the related information, and the second small image includes the small real function set and the complementary real function. The complementary real function is added to the second small image, so that a speed of calling the complementary real function by the first program can be improved, and user experience can be improved.

A second aspect of this application provides a program processing method.

The method includes: A second device sends a first small image to a first device. The first small image includes a small real function set and a small stub function set, the small stub function set corresponds to a complementary real function set of a first complementary image, the small real function set corresponds to a complementary stub function set of the first complementary image, the small stub function set includes a small stub function, the small stub function is used by a first device to determine, based on the small stub function, whether to load a complementary real function corresponding to the small stub function, and the complementary real function set includes the complementary real function.

For description of beneficial effects of the second aspect of this application, refer to the foregoing description of beneficial effects of the first aspect of this application.

According to the second aspect of this application, in a first implementation of the second aspect of this application, the small stub function is specifically used by the first device to attempt to run the small stub function according to an instruction of a first program, and if an exception is detected, the complementary real function is loaded.

According to the second aspect of this application or the first implementation of the second aspect, in a second implementation of the second aspect of this application, the small real function set is a set of functions that are run by using target code in a process of running a target case set, and the complementary real function set is a set of functions that are not run by using the target code in the process of running the target case set.

According to the second implementation of the second aspect of this application, in a third implementation of the second aspect of this application, the target code includes a target function, the target function includes a target character string, a data volume of the target character string is less than a data volume of a source character string, the target code is obtained based on source code, the source code includes a source function, and the source function includes the source character string.

According to the third implementation of the second aspect of this application, in a fourth implementation of the second aspect of this application, the target character string is used with a target correspondence to obtain the source character string.

According to any one of the second aspect of this application, or the first implementation to the fourth implementation of the second aspect, in a fifth implementation of the second aspect of this application, the first device stores the first small image, and the first small image and the first complementary image are stored in different devices.

According to any one of the second aspect of this application, or the first implementation to the fourth implementation of the second aspect, in a sixth implementation of the second aspect of this application, the first complementary image and the first small image are stored in different storage media of the first device.

According to any one of the second aspect of this application, or the first implementation to the sixth implementation of the second aspect, in a seventh implementation of the second aspect of this application, the second device receives related information that is of the complementary real function and that is sent by the first device; and the second device obtains a second small image based on the related information, where the second small image includes the small real function set and the complementary real function.

A third aspect of this application provides a program execution apparatus. The apparatus is installed with a computer system, the computer system includes a first small image, and the apparatus includes: a receiving module, configured to receive a call request of a first program for a small stub function, where the small stub function is a function in a small stub function set, and the first small image includes the small stub function set and a small real function set; a loading module, configured to load the small stub function based on the call request; and a processing module, configured to determine, based on the small stub function, whether to load a complementary real function corresponding to the small stub function, where the complementary real function is a function in a complementary real function set, a first complementary image includes the complementary real function set and a complementary stub function set, the complementary stub function set corresponds to the small real function set, and the complementary real function set corresponds to the small stub function set.

According to the third aspect of this application, in a first implementation of the third aspect of this application, the processing module is specifically configured to: attempt to run the small stub function according to an instruction of a first program, and if detecting an exception, load the complementary real function.

According to the third aspect of this application or the first implementation of the third aspect, in a second implementation of the third aspect of this application, the small real function set is a set of functions that are run by using target code in a process of running a target case set, and the complementary real function set is a set of functions that are not run by using the target code in the process of running the target case set.

According to the second implementation of the third aspect of this application, in a third implementation of the third aspect of this application, the loading module is further configured to load a target function. The target function includes a target character string, a data volume of the target character string is less than a data volume of a source character string, the target code includes the target function, the target code is obtained based on source code, the source code includes a source function, and the source function includes the source character string.

According to the third implementation of the third aspect of this application, in a fourth implementation of the third aspect of this application, the apparatus further includes: a first sending module, configured to send the target character string to a second device, where the target character string is used by the second device to obtain the source character string based on a target correspondence and the target character string.

According to any one of the first implementation to the fourth implementation of the third aspect of this application, in a fifth implementation of the third aspect of this application, the processing module is specifically configured to load the complementary real function from the second device based on the small stub function.

According to any one of the third aspect of this application, or the first implementation to the fourth implementation of the third aspect, in a sixth implementation of the third aspect of this application, the first complementary image and the first small image are stored in different storage media of the first device.

According to any one of the third aspect of this application, or the first implementation to the sixth implementation of the third aspect, in a seventh implementation of the third aspect of this application, the apparatus further includes: a second sending module, configured to: if determining, based on the small stub function, to load the complementary real function, send related information of the complementary real function to the second device, where the related information is used by the second device to obtain a second small image based on the related information, and the second small image includes the small real function set and the complementary real function.

A fourth aspect of this application provides a computer system, where the system includes a processor and a memory.

The memory stores a first small image.

The processor is configured to receive a call request of a first program for a small stub function, where the small stub function is a function in a small stub function set, and the first small image includes the small stub function set and a small real function set.

The processor is further configured to load the small stub function based on the call request.

The processor is further configured to determine, based on the small stub function, whether to load a complementary real function corresponding to the small stub function. The complementary real function is a function in a complementary real function set, a first complementary image includes the complementary real function set and a complementary stub function set, the complementary stub function set corresponds to the small real function set, and the complementary real function set corresponds to the small stub function set.

According to the fourth aspect of this application, in a first implementation of the fourth aspect of this application, the processor is specifically configured to: attempt to run the small stub function according to an instruction of a first program, and if detecting an exception, load the complementary real function.

According to the fourth aspect of this application or the first implementation of the fourth aspect, in a second implementation of the fourth aspect of this application, the small real function set is a set of functions that are run by using target code in a process of running a target case set, and the complementary real function set is a set of functions that are not run by using the target code in the process of running the target case set.

According to the second implementation of the fourth aspect of this application, in a third implementation of the fourth aspect of this application, the processor is further configured to load a target function. The target function includes a target character string, a data volume of the target character string is less than a data volume of a source character string, the target code includes the target function, the target code is obtained based on source code, the source code includes a source function, and the source function includes the source character string.

According to the third implementation of the fourth aspect of this application, in a fourth implementation of the fourth aspect of this application, the processor is further configured to send the target character string to a second device, where the target character string is used by the second device to obtain the source character string based on a target correspondence and the target character string.

According to any one of the first implementation to the fourth implementation of the fourth aspect of this application, in a fifth implementation of the fourth aspect of this application, the processor is specifically configured to load the complementary real function from the second device based on the small stub function.

According to any one of the fourth aspect of this application, or the first implementation to the fourth implementation of the fourth aspect, in a sixth implementation of the fourth aspect of this application, the first complementary image and the first small image are stored in different storage media of the first device.

According to any one of the fourth aspect of this application, or the first implementation to the sixth implementation of the fourth aspect, in a seventh implementation of the fourth aspect of this application, the processor is further configured to: if determining, based on the small stub function, to load the complementary real function, send related information of the complementary real function to the second device, where the related information is used by the second device to obtain a second small image based on the related information, and the second small image includes the small real function set and the complementary real function.

A fifth aspect of this application provides a program processing apparatus. The apparatus includes a sending module, configured to send a first small image to a first device. The first small image includes a small real function set and a small stub function set, the small stub function set corresponds to a complementary real function set of a first complementary image, the small real function set corresponds to a complementary stub function set of the first complementary image, the small stub function set includes a small stub function, the small stub function is used by a first device to determine, based on the small stub function, whether to load a complementary real function corresponding to the small stub function, and the complementary real function set includes the complementary real function.

According to the fifth aspect of this application, in a first implementation of the fifth aspect of this application, the small stub function is specifically used by the first device to attempt to run the small stub function according to an instruction of a first program, and if an exception is detected, the complementary real function is loaded.

According to the fifth aspect of this application or the first implementation of the fifth aspect, in a second implementation of the fifth aspect of this application, the small real function set is a set of functions that are run by using target code in a process of running a target case set, and the complementary real function set is a set of functions that are not run by using the target code in the process of running the target case set.

According to the second implementation of the fifth aspect of this application, in a third implementation of the fifth aspect of this application, the target code includes a target function, the target function includes a target character string, a data volume of the target character string is less than a data volume of a source character string, the target code is obtained based on source code, the source code includes a source function, and the source function includes the source character string.

According to the third implementation of the fifth aspect of this application, in a fourth implementation of the fifth aspect of this application, the target character string is used with a target correspondence to obtain the source character string.

According to any one of the fifth aspect of this application, or the first implementation to the fourth implementation of the fifth aspect, in a fifth implementation of the fifth aspect of this application, the first device stores the first small image, and the first small image and the first complementary image are stored in different devices. The device storing the first complementary image is configured to provide the complementary real function set for a plurality of devices, and the plurality of devices include the first device.

According to any one of the fifth aspect of this application, or the first implementation to the fourth implementation of the fifth aspect, in a sixth implementation of the fifth aspect of this application, the first complementary image and the first small image are stored in different storage media of the first device.

According to any one of the fifth aspect of this application, or the first implementation to the sixth implementation of the fifth aspect, in a seventh implementation of the fifth aspect of this application, the apparatus further includes: a receiving module, configured to receive related information that is of the complementary real function and that is sent by the first device; and a processing module, configured to obtain a second small image based on the related information, where the second small image includes the small real function set and the complementary real function.

A sixth aspect of this application provides a program execution device, including a processor and a memory, where the memory stores a first small image and an executable program, and the first small image includes a small stub function. The processor is configured to: obtain the executable program from the memory, and process the small stub function based on the executable program. A specific processing method includes the method according to any one of the first aspect or the implementations of the first aspect.

A seventh aspect of this application provides a program processing device, including a processor and a memory, where the memory stores a processing program. The processor is configured to: obtain the processing program from the memory, and obtain a first small image based on the processing program and source code. A specific processing method includes the method according to any one of the second aspect or the implementations of the second aspect.

An eighth aspect of this application provides a computer storage medium, where the computer storage medium stores instructions. When the instructions are executed on a computer, the computer is enabled to perform the method according to any one of the first aspect or the implementations of the first aspect; or the computer is enabled to perform the method according to any one of the second aspect or the implementations of the second aspect.

A ninth aspect of this application provides a computer program product. When the computer program product is executed on a computer, the computer is enabled to perform the method according to any one of the first aspect or the implementations of the first aspect; or the computer is enabled to perform the method according to any one of the second aspect or the implementations of the second aspect.

### BRIEF DESCRIPTION OF DRAWINGS

FIG. 1 is a schematic flowchart of tailoring a function based on a function dependency rate;
FIG. 2 is a schematic flowchart of obtaining a small image and a complementary image based on source code;
FIG. 3 is a schematic flowchart of a processing program according to an embodiment of this application;
FIG. 4 is a schematic diagram of an application scenario according to an embodiment of this application;
FIG. 5 is a schematic flowchart of a program processing method according to an embodiment of this application;
FIG. 6 is a schematic flowchart of miniaturizing a character string by using an "ID-based" method according to an embodiment of this application;
FIG. 7 is a schematic diagram of a relationship between a function in source code having a dependency and an overwritten function in the source code;
FIG. 8 is a schematic flowchart of obtaining an image based on a coverage rate according to an embodiment of this application;
FIG. 9 is a schematic flowchart of a program execution method according to an embodiment of this application;
FIG. 10 is a schematic diagram of a structure of a program execution apparatus according to an embodiment of this application;
FIG. 11 is a schematic diagram of a structure of a program processing apparatus according to an embodiment of this application; and
FIG. 12 is a schematic diagram of a structure of a first device or a second device according to an embodiment of this application.

### DESCRIPTION OF EMBODIMENTS

Embodiments of this application are applied to the field of program processing, and provide a program execution method, a program processing method, and a related device, to reduce a requirement of a first program for a running memory.

For ease of understanding the technical solutions provided in this application, the following first describes some related concepts.

A functional dependency is a mathematically derived term that represents a dependency of a value of one attribute or set of attributes on a value of another attribute or set of attributes. It is assumed that R(U) is a relational pattern on an attribute set U, and X and Y are subsets of U. For any two possible relationships r1 and r2 of R(U), if r1[x] = r2[x], r1[y] = r2[y]; or if r1[y] is not equal to r2[y], r1[x] is not equal to r2[x]. To be specific, X determines Y, or Y depends on X.

A function dependency rate (dependency rate for short) indicates a proportion of functions that have dependencies (or call relationships) in a program. The function dependency rate may be obtained by performing the following steps. It is assumed that a quantity of all functions in the program is N. Subfunctions on which an entry point depends and that are of the program are scanned from the entry point (for example, main) of the program, and all the subfunctions and the entry point form a set A. It is assumed that a quantity of functions in the set A is M. The set A and the program do not include a duplicate function (if the set A includes the duplicate function, a quantity of functions in the set A after deduplication is M). The function dependency rate of the program is equal to M/N.

A function coverage rate (coverage for short) indicates a proportion of functions that have been run in a program. The function coverage rate may be obtained by performing the following steps. It is assumed that a quantity of all functions in the program is N; and it is assumed that after the program runs a case set, a quantity of functions that have been run is K. The function coverage rate is equal to K/N. The duplicate function is counted only once in the functions that have been run.

A stub function is also referred to as a stub point. The stub function is usually used to replace some interface functions and test a feature of a current function. In an implementation, the stub function in this application may be a function with a small size, or may be a null (null) function. In addition, the stub function in this application may be specially designed, so that an exception occurs when the stub function is executed.

A computer system includes a hardware system and a software system. The hardware system is an organic combination of various physical components based on electrical, magnetic, optical, and mechanical principles, and is an entity on which the system works. The software system is various procedures and documents used to direct the entire system to work based on a specified requirement. Therefore, macroscopically speaking, the software system of the computer system is also a program, and may also be tailored. Some computer systems may provide a running environment for a third-party program, for example, a computer system on UE, a computer system on a notebook computer, and the like.

With the rapid development of the Internet, a sales volume of computer devices keeps increasing. For example, in 2019, the world's top 3 mobile phone manufacturers sold more than 200 million mobile phones. Faced with the massive sales volume, other than user experience and product quality, costs of computer devices are one of important competitiveness. Generally, a computer device needs to implement a corresponding function by using a program, and a storage medium is indispensable for storage and running of the program. In the embedding field, costs of a storage medium are an important part of device costs. To reduce the costs of the storage medium, miniaturization processing may be performed on a program. Through program miniaturization, a size of the program can be reduced. This saves storage space. There are the following miniaturization technologies: 1. Tailoring of programs and services (for example, Windows and Android); 2. Tailoring of software packages (for example, Red Hat, SUSE, and Ubuntu); 3. Tailoring of files (for example, deletion of useless files through commands in Windows and Linux); and 4. Tailoring of function granularities (for example, a gc-section link option of a gcc compiler). The tailoring of function granularities is tailoring of a minimum granularity in the foregoing tailoring, which is referred to as function tailoring for short. The following uses the gcc compiler as an example to describe the function tailoring.

In general, the gcc compiler places each function and global variable in an independent section during source code compilation. A section can be a function or a global variable. The gcc compiler identifies a dependency between each section and an entry point during a linking process, and deletes a section that has no dependency with the entry point. The following describes this in detail. For ease of understanding, some specific code is introduced.

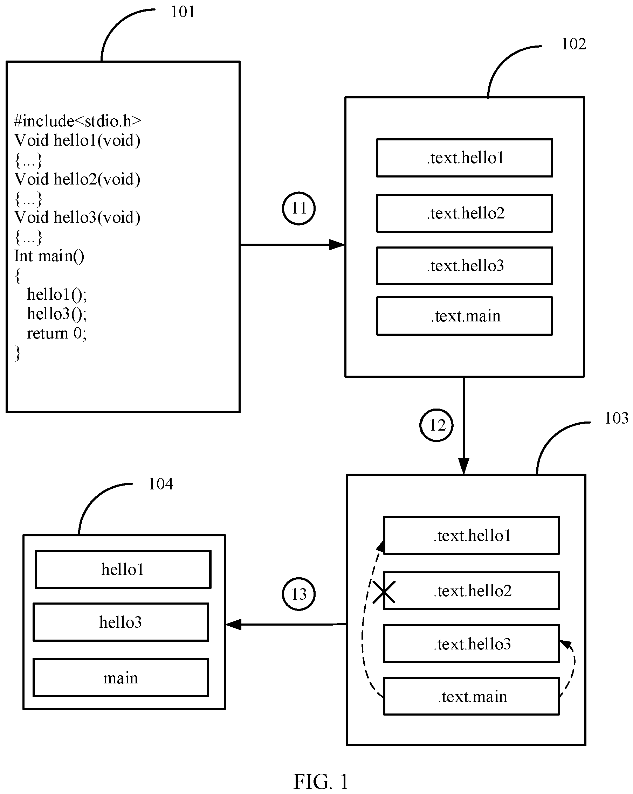

FIG. 1 is a schematic flowchart of tailoring a function based on a function dependency rate. Step 11 is a compilation phase. The gcc compiler compiles each function in source code 101 into an independent section. The source code is also referred to as source code. The source code 101 includes four functions: hello1(), hello2(), hello3() and main(). Specific content of the first three functions is not shown in FIG. 1. It is assumed herein that there is no dependency between hello 1(), hello2(), and hello3(). The function main() is an entry point of a program. The function main() includes code hello 1 () and hello3 (), which means that hello1() and hello3 () are called when main() is executed. In other words, there is a dependency between hello1(), hello3(), and main(). A section set 102 can be obtained through compiling by the gcc compiler. The section set 102 includes four sections that are named text.hello1 to 3 and .text.main. Step 12 is a link preparation phase. A linker in the gcc compiler scans a call relationship from the entry point. Based on the example in step 1, there is a dependency between .text.hello1, .text.hello3, and .text.main. .text.hello2 is an isolated function. To be specific, there is no dependency between text.hello2 and .text.main. Step 13 is a linking phase. The linker deletes a section corresponding to the isolated function, and generates an executable file 104.

The foregoing function tailoring is based on the function dependency rate. A smaller function dependency rate indicates better function tailoring effect and a smaller size of the obtained executable file 104. The tailoring manner is usually applicable to tailoring of a program including an entry point (for example, main), but is not applicable to tailoring of a shared library or an OS kernel (system kernel), for example, a computer system including the shared library or the OS kernel (system kernel). A running environment provided by the shared library or the OS kernel (system kernel) in the computer system for a third-party program may include a function. The function has no dependency with an entry point of the computer system, but has a dependency with an entry point of the third-party program. If the function is deleted by using the foregoing function tailoring manner, the third-party program may fail to run properly. In view of this, a "small image-complementary image" technology is used in the industry. The technology may be divided into two parts. A first part is a process of obtaining the small image and the complementary image based on source code, and a second part is a process of using the small image and the complementary image that are described separately in the following.

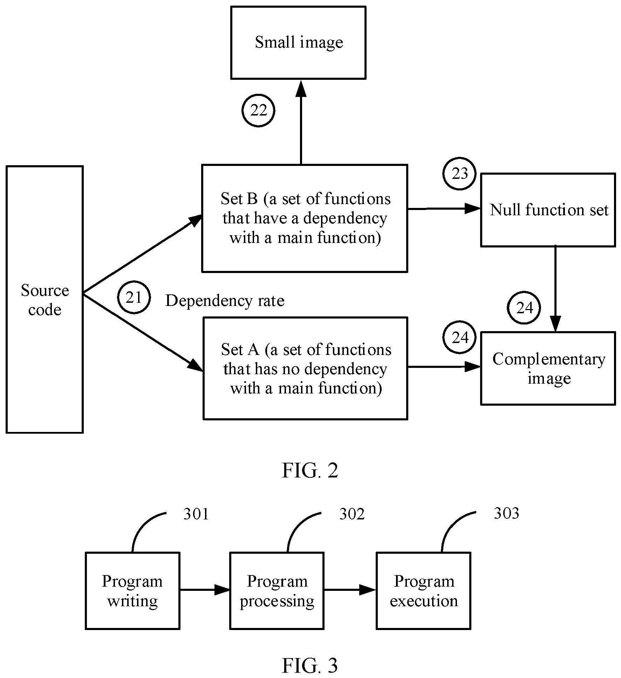

The first part is usually completed by a computer device. FIG. 2 is a schematic flowchart of obtaining a small image and a complementary image based on source code. In step 21, the computer device distinguishes between a function set B in the source code that has a dependency with an entry point, and a function set A in the source code that has no dependency with the entry point. In step 22, the computer device deletes a function in the function set A from the source code, and retains a function in the function set B to obtain the small image. In step 23 and step 24, the computer device retains the function in the function set A from the source code, and replaces the function in the function set B with a null (null) function, that is, replaces the function set B with a null function set to obtain the complementary image. The function in the function set A in the complementary image is referred to as a real function. The null function set in the complementary image corresponds to the function set B in the small image, or functions in the null function set in the complementary image one-to-one correspond to functions in the function set B in the small image. For ease of understanding, description is provided with reference to the source code 101 in FIG. 1. When the source code in FIG. 2 is equal to the source code 101 in FIG. 1, the small image is equal to the executable file 104, the small image includes hello1(), hello3(), and main(), and the complementary image includes hello2 (), a null function 1, a null function 3, and a null function 2. The null function 1 corresponds to hello1(), the null function 3 corresponds to hello3(), and the null function 2 corresponds to main().

The second part is the process of using the small image and the complementary image, and is performed by a first device on which a computer system is installed. It is assumed that code in a third-party program calls a function 1 and a function 2. The function 1 is a function in the small image, and the function 2 is the real function in the complementary image. When the first device starts the third-party program, the first device loads the function 1 and the function 2 in a flash memory flash or a hard disk to a running memory of the first device. However, in actual application, the running memory of the first device is usually limited. If the code in the third-party program calls excessive functions, the running memory may be insufficient; consequently, the third-party program fails to run.

In view of this, this application proposes a program processing method. In the method, in a process of obtaining a small image based on source code, a computer device that performs an operation of a first part does not delete a complementary real function set, but replaces a complementary real function with a stub function, that is, replaces the complementary real function set with a small stub function set. The complementary real function set described herein may be the foregoing function set A, or may not be the function set A. When the complementary real function set is the function set A, the complementary real function set is obtained based on a dependency rate, and the complementary real function set is a function set that is in the source code and that has no function dependency with an entry point. When the complementary real function set is not the function set A, the complementary real function set may be obtained based on a function coverage rate, and the complementary real function set is a function set that is in the source code and that is not run in a process of running a target case set. In addition to replacing the complementary real function set with the small stub function set, the computer device further retains a correspondence between the small stub function set and the complementary real function set in a complementary image.

When the program execution method provided in this application is used by the first device to run a third-party program, if the third-party program includes code for calling a complementary real function, when starting the third-party program, the first device first loads a small stub function corresponding to the complementary real function, instead of directly loading the complementary real function to the running memory. The computer device indirectly loads the complementary real function by using the small stub function only when the small stub function is about to run or runs. The small stub function may be understood as a buffer for loading the complementary real function by the computer device. Whether to load the complementary real function can be controlled through addition of the buffer, so that a requirement of the third-party program for the running memory can be reduced. For example, when a related function corresponding to the complementary real function is not enabled in the third-party program, the complementary real function is not loaded.

For ease of understanding the technical solutions provided in embodiments of this application, a process of a processing program is first described. FIG. 3 is a schematic flowchart of a processing program according to an embodiment of this application. As shown in FIG. 3, the process of the processing program may include program writing 301, program processing 302, and program execution 303. The program writing 301 is a process of generating source code, including but not limited to manual input, software generation, and the like. The program processing 302 is a process of preprocessing, based on program writing, a program that is completely or partially written, for example, automatic correction, tailoring, and compilation. The tailoring is deleting or replacing some functions in the source code to reduce a size of the source code. The program processing 302 in this embodiment of this application mainly includes the foregoing program processing method. The source code is tailored to obtain a complementary real function set and a small real function set, and a small image and a complementary image are obtained based on the complementary real function set and the small real function set. The small image includes a small real function and a small stub function, and the complementary image includes a complementary real function and a complementary stub function. The program execution 303 is a running process of a third-party program. The third-party program is run to implement a related function corresponding to the third-party program. For example, when the third-party program is a program related to photographing, the related function may be photographing, photo editing, persona beauty, or the like. In a running process of the third-party program, the third-party program depends on functions in the small image and the complementary image to implement related functions. The program execution 303 in this embodiment of this application mainly includes the foregoing program execution method. A function that the third-party program actually depends on, or a function that the third-party program needs to call is a complementary real function. The complementary real function is in the complementary image. When the third-party program needs to call the complementary real function, the third-party program may call the complementary real function by using the small stub function in the small image.

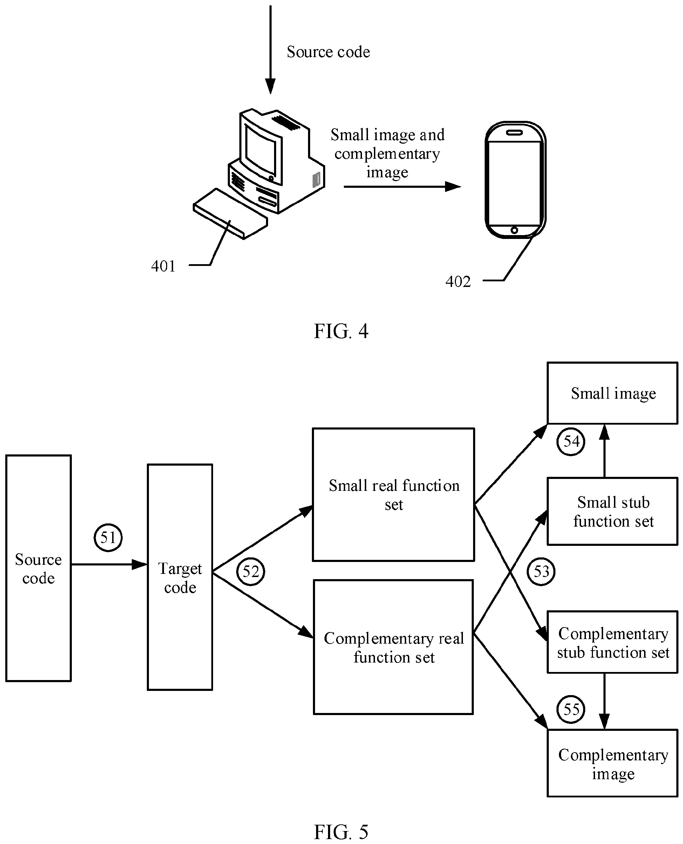

The process of the processing program is described above, and the process is roughly divided into the program writing 301, the program processing 302, and the program execution 303. The process of the processing program needs to be performed by a specific computer device. Different steps may be completed in different computer devices, or may be completed in a same computer device. For example, the program writing 301 is completed in a device 1, the device 1 sends the completed source code to a device 2, the device 2 obtains the small image and the complementary image based on the source code, and the device 2 runs the third-party program by using the small image and the complementary image. Alternatively, FIG. 4 is a schematic diagram of an application scenario according to an embodiment of this application. As shown in FIG. 4, source code is obtained from a second device 401. The source code may be compiled by the second device 401, or may be compiled by another device. After obtaining the source code, the second device 401 performs program processing 302 on the source code to obtain a small image and a complementary image. After obtaining the small image and the complementary image, the second device 401 transfers the small image and the complementary image to a first device 402, and the first device 402 performs the step of program execution 303. Specifically, a computer system in the first device 402 may perform the step of program execution 303. To be specific, a program execution method in this embodiment of this application may be performed by the first device 402 or the computer system 402. In subsequent description of this embodiment of this application, an example in which the first device 402 is used as an execution body is used for description. In this embodiment of this application, FIG. 4 is subsequently used as an example for description. For corresponding processing in another scenario, refer to the description of the scenario in FIG. 4.

In the scenario in FIG. 4, the second device 401 may be a desktop computer, a notebook computer, a server, or the like. The first device 402 may be a band, a washing machine, a router, a desktop computer, a notebook computer, a smartphone, or the like. The second device 401 may be connected to the first device 402, or may not be connected to the first device 402. If the second device 401 is connected to the first device 402, a connection mode may be a wired connection or a wireless connection. The wireless connection may be a wireless hotspot, Bluetooth, or the like. If the second device 401 is not connected to the first device 402, the small image and the complementary image may be transferred through a storage medium, for example, a USB flash drive.

The following separately describes the program processing method and the program execution method in embodiments of this application. FIG. 5 is a schematic flowchart of a program processing method according to an embodiment of this application.

In step 51, a second device obtains target code based on source code.

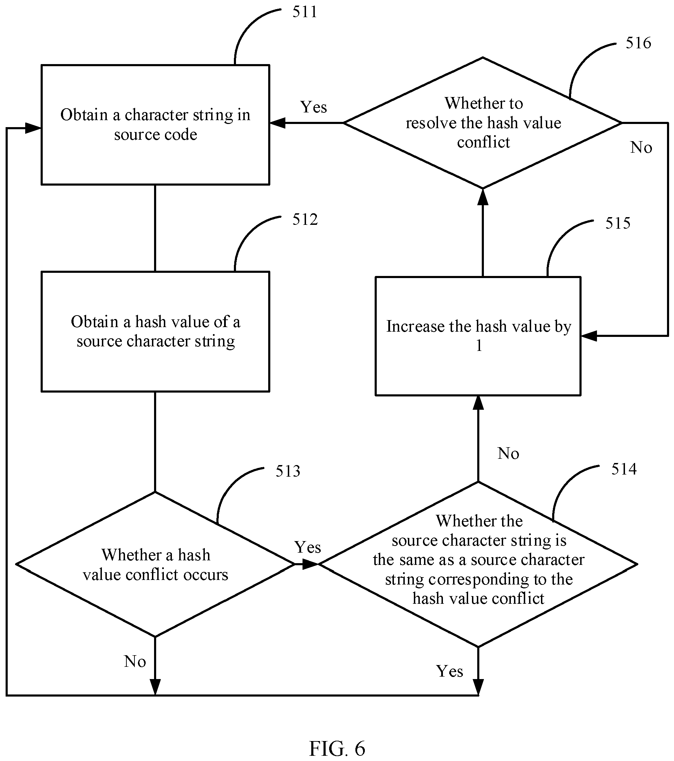

The source code may include some character strings, and the character strings occupy a specific size in the source code. For example, program logs are logs that need to be recorded or printed during running of a program. For a program, logs are recorded or printed when key initialization or abnormal branches occur (for maintenance and testing). A log-related character string in the source code is compiled into an executable program to increase a size of the program. In a compiled executable program, a log character string usually occupies 5% to 10% of a size of the program, and impact of size consumption on storage space of a first device cannot be ignored. In view of this, in this application, a character string is miniaturized by using an "ID-based" method. The following provides detailed description. FIG. 6 is a schematic flowchart of miniaturizing a character string by using an "ID-based" method according to an embodiment of this application.

In step 511, the second device obtains a character string in the source code. For ease of understanding, the following uses specific source code for description. The source code includes a FuncA function.

```
          Source code:
          FuncA/*Function name*/
           {...; /*Indicate that there may be other code here*/
          If (ret!=0) /*If ret is not equal to 0*/
           {Printf("Error:FuncA init Failed!The ret is %d\n",ret);
/*Output Error:FuncA init Failed!The ret is %d */;
           }else/*Otherwise*/
           f Printf("FuncA init success!\n");} /*Output FuncA init success!*/
          Return ret;} /*Return ret */
```

In the foregoing source code, Error:FuncAinit Failed!The ret is and FuncA init success! are two character strings. The two character strings are a source character string 1 and a source character string 2 for short. The source character string 1 indicates that initialization fails and a return value is output, and the source character string 2 indicates that the initialization is successful. The second device obtains the source character string 1.

In step 512, the second device obtains a hash value (also referred to as a hash value) of the source character string.

In step 513, the second device determines whether a hash value conflict occurs. In the source code, a quantity of character strings is not determined, and only some code of a function in the source code is described by using an example in step 511. If there are a plurality of character strings in the source code, and the second device obtains hash values of the plurality of character strings, hash values of two character strings may be the same, that is, a hash value conflict occurs. Certainly, if the source character string 1 is a first character string obtained by the second device, the operation in this step may not be performed. If the second device determines that the hash value conflict occurs, step 514 is performed; otherwise, step 511 is performed.

In step 514, a computer determines whether the source character string is the same as a source character string corresponding to the hash value conflict.

A target correspondence list stores a correspondence between a source character string and a target character string. In this embodiment of this application, an example in which the target character string is a hash value is used for description. A hash value corresponding to the source character string 1 is referred to as a hash value 1, and a hash value that conflicts with the hash value 1 is referred to as a hash value 3. The hash value 3 is obtained by the second device based on a source character string 3. The computer determines whether the source character string 1 is the same as the source character string 3 in the target correspondence list. If the source character string 1 is the same as the source character string 3, the source character string 1 is skipped. The second device obtains a next source character string, and restarts from step 511. If the source character string 1 is different from the source character string 3, step 515 is performed.

In step 515, the second device increases the hash value by 1. To resolve the hash value conflict, the second device increases a hash value corresponding to the source character string 1 by 1.

In step 516, the second device determines whether to resolve the hash value conflict. If no, step 515 is performed until the hash value conflict is resolved. If yes, the second device obtains a next source character string, and restarts from step 511.

By performing the steps in 511 to 516, the second device may obtain a target correspondence and the target character string corresponding to the source character string. The second device replaces the source character string in a source function with the target character string to obtain a target function. The foregoing FuncA is the source function, and the target function is specifically as follows:

```
          Target function:
          FuncA/*Function name*/
           {...; /*Indicate that there may be other code here*/
If (ret!=0) /*If ret is not equal to 0*/
           {Printf("afab9b15%d\n", ret); /*Output afab9b15%d */
           }else/*Otherwise*/
           {Printf("8a52d706\n");} /*Output 8a52d706 */
          Return ret;} /*Return ret */
```

In the foregoing target function, the hash value 1 is afab9b15, and a hash value corresponding to the source character string 2 is 8a52d706. The target function and the source function are the same in other functions, except for different output content. The target function corresponds to the source function.

In step 52, the second device obtains a small real function set and a complementary real function set based on the target code.

It can be learned from the foregoing description that the complementary real function set may be the function set A obtained based on the function dependency rate in FIG. 2, or may be obtained based on the function coverage rate. In contrast, the small real function set may be the function set B obtained based on the function dependency rate in FIG. 2, or may be obtained based on the function coverage rate. If the complementary real function set is the function set A, for step 42, refer to the foregoing process of obtaining the function set A in FIG. 2 by the computer device. A process of obtaining the small real function set and the complementary real function set based on the function coverage rate by the second device is described herein with emphasis. It can be learned from the foregoing definition of the function coverage rate that the function coverage rate is a ratio of a quantity of functions that have been run by using source code in a process of running a target case set to a quantity of functions in the source code. For ease of understanding, neither the run function nor the function in the source code includes a duplicate function. In the process of running the target case set, different cases or even a same case may repeatedly call a function. However, when a quantity of functions that have been run is calculated, the function is calculated only once. Based on the definition of the function coverage rate, definition of the small real function set and the complementary real function set can be obtained. The small real function set is a set of functions that are run by using the target code in the process of running the target case set, and the complementary real function set is a set of functions that are not run by using the target code in the process of running the target case set.

Before the second device runs the code, the second device compiles the target code, and runs the target case set by using the compiled target code. The target case set includes all or some functions that can be executed by the compiled target code. For example, the functions that can be executed by using the target code include three functions: photographing, photo editing, and persona beauty. The target case set includes any one or more of the three functions. For example, the target case set includes photographing and photo editing. The second device may transfer, to a device (for example, the first device), a program obtained after the target code is compiled, so that the device runs photographing and photo editing by installing the program obtained after the target code is compiled, and returns function coverage information to the second device. The second device obtains the small real function set and the complementary real function set based on the function coverage information. Alternatively, the second device simulates the photographing and photo editing functions by using the target code. The second device collects statistics on a function set that has been run by using the target code in the process of running the target case set and a function set that has not been run by using the target code in the process of running the target case set. The function set that has been run is the small real function set, and the function set that has not been run is the complementary real function set. A ratio of a quantity of functions in the set of run functions to a quantity of functions in the target code is a function coverage rate of the target code. It should be understood that the example of the target case set herein is merely intended to facilitate the technical solutions in embodiments of this application, and cannot be used as a condition for limiting this application. For example, if the compiled target code may return a value to a third-party program, returning the value to the third-party program also belongs to a function that can be executed by the compiled target code.

As described above, the second device obtains the small real function set and the complementary real function set by using the target code. It should be understood that, because the target code corresponds to the source code, the second device may also obtain the small real function set and the complementary real function set by using the source code. For example, the second device transfers, to the first device, the program obtained after the source code is compiled, and the first device performs photographing and photo editing by installing the program obtained after the source code is compiled. The first device returns the function coverage information to the second device. The function coverage information includes a sequence number set corresponding to functions that have been run in the source code. In the source code and the target code, all functions are numbered based on an arrangement sequence of the functions. In other words, each function has a corresponding sequence number. In the source code and the target code, sequence numbers of corresponding functions are the same, for example, the source function and the target function. Therefore, even if sequence numbers returned by the first device are the sequence number set corresponding to the functions in the source code, the second device may determine the small real function set in the target code based on the sequence number set, and further determine the complementary real function set.

In step 53, the second device obtains a complementary stub function set based on the small real function set, and obtains a small stub function set based on the complementary real function set.

The second device replaces each function in the small real function set with a stub function to obtain the complementary stub function set, and replaces each function in the complementary real function set with the stub function to obtain the small stub function set.

In step 54 and step 55, the second device obtains a small image based on the small real function set and the small stub function set, and obtains a complementary image based on the complementary real function set and the complementary stub function set.

The second device compiles code including the small real function set and the small stub function set to obtain the small image, and the second device compiles code including the complementary real function set and the complementary stub function set to obtain the complementary image. In other words, the second device replaces the complementary real function set in the source code with the small stub function set, and then compiles the source code to obtain the small image. The second device replaces the small real function set in the source code with the complementary stub function set, and then compiles the source code to obtain the complementary image.

The second device needs to retain a correspondence between a small stub function set and a complementary real function set. To be specific, one small stub function corresponds to one complementary real function. The second device may generate a mapping table, where the mapping table includes a correspondence between a small stub function and a complementary real function. Alternatively, in another embodiment, the second device sets a function name of the complementary real function to be the same as or similar to a function name of the small stub function to retain the correspondence between a small stub function and a complementary real function. In another embodiment, a small stub function set of a minimum image and a complementary real function set of the complementary image are sorted in a same order, and a small real function set of the minimum image and a complementary stub function set of the complementary image are sorted in a same order, so that a loader loads the function and finds an offset address of the function. For example, the second device may retain the correspondence between a small stub function and a complementary real function by using a sequence number of the function. In the small image and the complementary image, the small stub function set and the complementary real function set number functions based on function arrangement orders thereof, and corresponding functions have a same sequence number. For example, the small stub function and the complementary real function have a same sequence number.

When running the third-party program subsequently, the first device may call the complementary real function by using an exception of the small stub function. To generate the exception when attempting to run the small stub function, the second device may set the small stub function to be non-executable. Specifically, the second device summarizes all small stub functions into a separate section, aligns an address of the section with a page size, and sets an attribute of the section to non-executable. When the first device attempts to run the small stub function, the exception occurs because the small stub function cannot be executed. In another embodiment, to reduce a size of the small stub function set, the small stub function is a null function.

Other than the foregoing method, the exception can be implemented by using code in the small stub function. For example, the following specifically provides an example of a small stub function.

```
          Int F4func(int a,void *b)/*function name*/
           { asm volatile(
           "push {r0∼r2\n}" /* Push registers r0 to r2 into a stack */
           "mov r0,#STUB_ABORT_ADDR\n" /*Assign a value
to the r0 register, where the assigned value is an
 address at which an exception can be generated during access */
           "mov r1,#STUB_ABORT_VALUE\n" /*Assign a value
to the r1 register, where the value is immediate
 data */
           "str r1,[r0]\n" /*Store the r1 register to the
address pointed to by r0, and because r0 stores the address at
           which the exception is generated during access,
this instruction generates a data exception */
           "pop r1, {r0∼r2 }\n";)) /*Pop the registers r0 to r2 out of the stack*/
          return 0; /* Return */}
```

In this example, a function name of the small stub function is Int F4func. When executing the small stub function, the first device first pushes the registers r0 to r2 into the stack, and then assigns the value to the register r0. The assigned value is the address at which the exception can be generated during access. When "str r1,[r0]\n" is executed, this instruction indicates that the r1 register is stored to the address specified by r0. Because r0 stores the address at which the exception is generated during access, this instruction generates the data exception.

It should be noted that, in this embodiment of this application, not all methods that can generate an exception are exhaustively listed. For a person skilled in the art, a segment attribute/page table attribute of a CPU may be used to construct an exception, a special invalid instruction, and a special data exception, so that the first device generates the exception when attempting to run the small stub function, which all fall within the protection scope of this application.

It should be noted that step 51 may not be performed, and in this case, the target code in step 52 is the source code. If step 51 is performed, the essence of step 51 is to replace the source function with the target function. Therefore, there is no strict time sequence requirement between step 51 and steps 52 and 53. For example, after obtaining the small image and the complementary image by using step 55 and step 54, the second device may replace the source function with the target function; or the second device completes step 51 while performing step 52. There is also no strict time sequence requirement between step 54 and step 55.

A difference between tailoring based on the function coverage rate and tailoring based on the function dependency rate is further described herein.

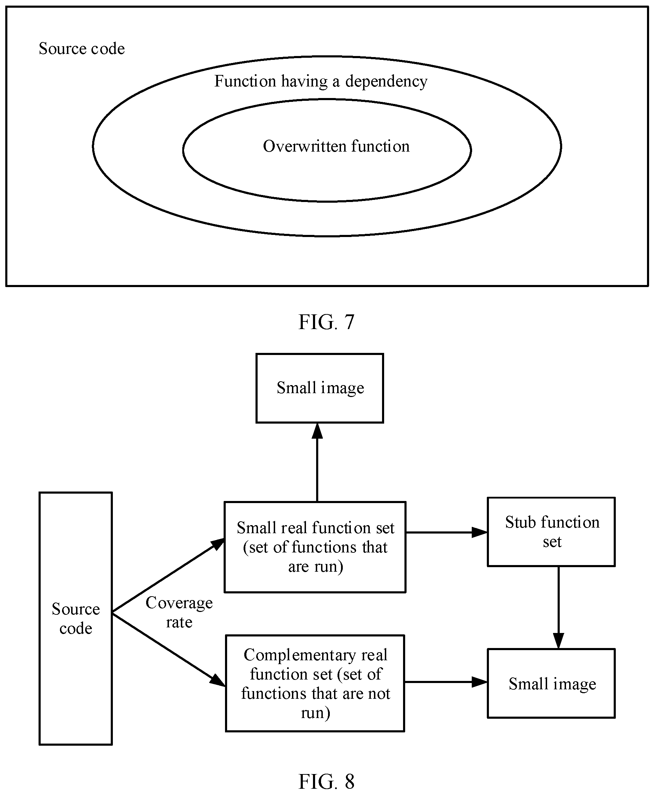

First, a size of a small image obtained based on the function coverage rate is usually smaller than a size of a small image obtained based on the function dependency rate. FIG. 7 is a schematic diagram of a relationship between a function in source code having a dependency and an overwritten function in the source code. Functions that have a dependency are a set of functions have a dependency with an entry point in source code. Overwritten functions are a set of functions that are run in a process of running a target case set by using the source code. Generally, because a function that has a dependency with the entry point is not necessarily run in a process of running a case set, a range of the function that has the dependency is usually greater than that of an overwritten function. Therefore, the small real function set is smaller than the function set B. Therefore, a size of a small image (small image 1 for short) obtained based on the coverage rate is usually smaller than a size of a small image (small image 2 for short) obtained based on the dependency rate. Because the stub function can be a null function, a size of the small stub function is ignored herein.

When the size of the small image 1 is less than the size of the small image 2, a size of a complementary image 1 corresponding to the small image 1 is greater than a size of a complementary image 2 corresponding to the small image 2. The first device may reduce costs in some manners. For example, the first device places the small image 1 and the complementary image 1 in different storage media. Different storage media include a storage medium 1 and a storage medium 2. The small image 1 is stored in the storage medium 1, and the complementary image 1 is stored in the storage medium 2. When sizes of storage space are the same, costs of the storage medium 2 are lower than costs of the storage medium 1. Because the size of the small image 1 is less than the size of the small image 2, the first device can save storage space of the storage medium 1. In other words, costs, on the storage medium, of the first device are reduced. In another embodiment, the first device locally stores the small image 1, and the complementary image 1 is stored in a cloud platform or a central device. In this case, costs of the first device are also reduced. Further, the cloud platform or the central device provides the complementary image 1 for a plurality of first devices, so that costs of the plurality of first devices can be reduced.

An image obtained based on the coverage rate is applicable to a scenario of a product family. For example, in a same product family, products are classified into low-end products (providing small-specification or tailored functions), mid-range products (providing standard functions), and high-end products (providing high-specification and rich functions). For ease of understanding, it is assumed that a function of a low-end product includes photographing, functions of a mid-range product include photographing and photo editing, and functions of a high-end product include photographing, photo editing, and persona beauty. To reduce research and development costs, in modern management methods and software engineering, products of a same product family usually use a same design solution and software version, that is, a same image. In the same product family, if a software version of a high-end product is placed in a low-end product, the low-end product may also need to provide large storage space, which is not conducive to reducing costs of the low-end product. In addition, it is also a waste of storage space to put an image that includes photographing, photo editing, and persona beauty functions into the low-end product that usually requires only photographing. For products of different levels, the second device may run the target code by using different target case sets to obtain different function coverage rates, that is, obtain different small images and complementary images. For example, for a small image and a complementary image that need to be used in the high-end product, the second device runs a target case set 1 by using the target code, where the target case set 1 includes photographing, photo editing, and persona beauty. For a small image and a complementary image that need to be used in the mid-range product, the second device runs a target case set 2 by using the target code, where the target case set 2 includes photographing and photo editing. For a small image and a complementary image that need to be used in the low-end product, the second device runs a target case set 3 by using the target code, where the target case set 3 includes photographing. For the source code, the function dependency rate is fixed, but the function coverage rate can be adjusted based on the target case set. Therefore, the image obtained based on the coverage rate is applicable to the scenario of the product family.

In another embodiment, a product family includes low-end, mid-range, and high-end products. An image of the low-end product is obtained based on a target case set 1, an image of the mid-range product is obtained based on a target case set 2, and an image of a high-end product is obtained based on a target case set 3. The target case set 1 is a subset of the target case set 2, and the target case set 2 is a subset of the target case set 3. Whether the three types of products belong to the same product family can be determined based on source code and the images used by the low-end, mid-range, and high-end products, product release time, and product names. For example, if the source code of the three types of products is the same or similar, the three types of products belong to the same product family. For example, if the names of the three types of products are similar, the three types of products belong to the same product family. For example, the name of the low-end product is ZXX5-m, the name of the mid-range product is ZXX5, and the name of the high-end product is ZXX5-pro, ZXX5-sup, or ZXX5-mate.

In another embodiment, a product family includes a low-end product and a high-end product. An image of the low-end product is obtained based on a target case set 1, and an image of the high-end product is obtained based on a target case set 2, where the target case set 1 is a subset of the target case set 2.

Finally, source code (such as a shared library and an OS kernel) that "includes an external function interface" can be tailored based on the coverage rate. When compiling the source code that "includes an external function interface", a compiler cannot predict which interfaces in an external interface set of the source code will be used by a third-party program. For example, C library glibc provides thousands of external function interfaces. When compiling C library glibc, the compiler cannot predict which interfaces in glibc external interface set will be used by the third-party program. Tailoring based on the coverage rate may call some or all external function interfaces in C library glibc by setting a target case set, so that some or all functions in the external function interfaces are in a small real function set. In tailoring based on the function dependency rate, the compiler needs to scan the dependency. If a program (such as the shared library) does not have an entry point, the compiler cannot scan the function dependency from the entry point. As a result, some or all external function interfaces in C library glibc cannot be included in a set B of the function 1.

It should be noted that the small image obtained based on the coverage rate in this embodiment of this application does not necessarily include a small function. FIG. 8 is a schematic flowchart of obtaining an image based on a coverage rate according to an embodiment of this application. In FIG. 8, a small real function set is a set of functions that are run by using source code in a process of running a target case set, and a complementary real function set is a set of functions that are not run by using the source code in the process of running the target case set. A stub function set may be a null function set. For related description of FIG. 8, refer to the related description in FIG. 2.

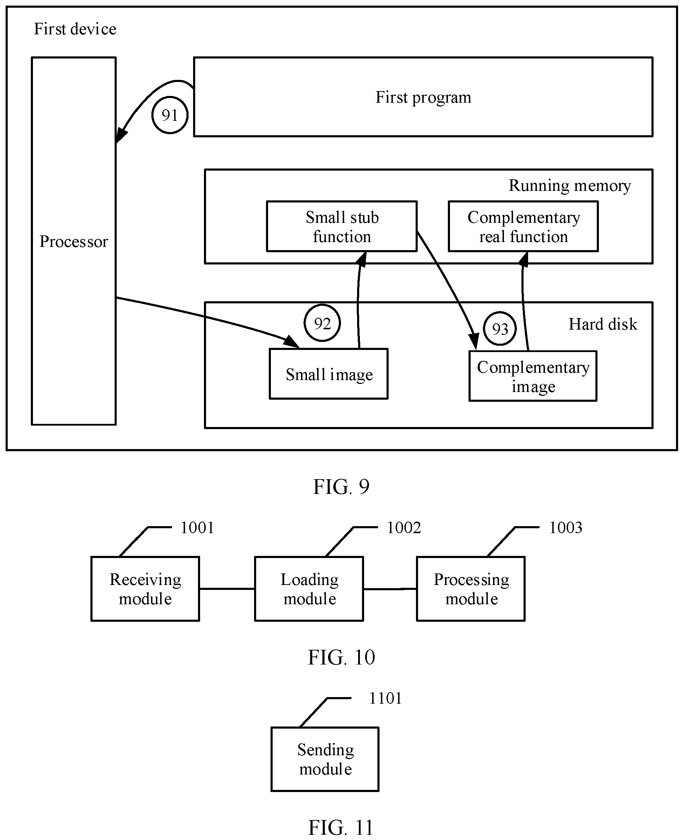

The foregoing describes the program processing method provided in this application. According to the program processing method provided in this application, the second device obtains the small image and the complementary image based on the source code. The small image is also referred to as a first small image, and the complementary image is also referred to as a first complementary image. For the small image and the complementary image that are obtained by using the method, the first device may run the small image and the complementary image by using the method described in FIG. 2. In other words, the first device does not call the complementary real function in the complementary image by using the small stub function in the small image. Specifically, refer to the related description in FIG. 2. The following describes a program execution method provided in this application. In the method, a first device calls a complementary real function by using a small stub function. For brevity of description, description related to the program execution method in the foregoing program processing method, for example, content included in the small image, the complementary image, and the small stub function, may be correspondingly referenced in the program execution method. FIG. 9 is a schematic flowchart of a program execution method according to an embodiment of this application.

In step 91, a first device receives a call request for a small stub function. When a first program is started, the first device loads, to a running memory, a function that needs to be called by the first program. The function that needs to be called by the first program includes a complementary real function. Therefore, the first device may receive the call request for the small stub function (corresponding to the complementary real function). Specifically, code in the first program includes a function name of the small stub function. The first device preferentially searches a small image for the function name to load the found small stub function to the running memory. The function that needs to be called by the first program does not mean that the first device definitely runs the function. When the first program does not start a related function corresponding to the function, the function is stored in the running memory, and waits for the corresponding related function to be started. When the corresponding related function is enabled, the first device runs the function. Functions that need to be called by the first program may include a function in a small real function set, or may not include a function in the small real function set. The first program may be in a hard disk in FIG. 9. The first program is not necessarily a third-party program, and may alternatively be a program built in a computer system of the first device.

In step 92, the first device loads the small stub function based on the call request. The small image includes a small stub function set and the small real function set, and the small stub function set includes the small stub function. The first device loads the small stub function in the small image based on the call request.

In step 93, the first device determines, based on the small stub function, to load the complementary real function corresponding to the small stub function. When the first program starts the related function corresponding to the small stub function, the first device attempts to run the small stub function. If the detecting an exception, the first device loads the complementary real function. Specifically, the complementary function is dynamically linked, and the first device calls a loader to load the complementary real function. The loader loads the complementary real function in a complementary image from a specific path based on the small stub function. "A specific path" is a specified and fixed path. For example, the system searches for a library in /lib and /usr/lib by default.

Two manners of generating the exception are specifically described in the foregoing program processing method. One manner is to set the attribute corresponding to the section where the small stub function is located to be non-executable. Usually, the attribute includes whether the file is readable, writable, and executable. When the attribute is set to be non-executable, the first device cannot run the small stub function, thereby detecting the exception. Another manner is to implement the exception through content of the code in the small stub function. In the first manner, the first device does not run the code in the small stub function; and in the second manner, the first device runs a part of the code in the small stub function.

Loading the complementary real function by detecting the exception is a preferred method in this embodiment of this application. By using the method, the first device may know that the first program is to start the related function corresponding to the complementary real function, and further load the complementary real function. In addition, before the first device detects the exception, the first device does not load the complementary real function. When the exception is detected, it indicates that running of the small stub function is not completed successfully. In this case, the first program does not continue to be executed because execution of the small stub function is completed. Therefore, in this embodiment of this application, not only a buffer is added for loading the complementary real function, but also the first program is suspended. This provides a time basis for loading the complementary real function, reduces errors that may occur in the first program, and improves user experience.

The foregoing describes the method for loading the complementary real function by detecting the exception, and the following describes a method for loading the complementary real function without detecting the exception. The first device monitors a physical address. When a value in the physical address is refreshed, the first device may monitor this refresh. The small stub function includes code for writing a value into the physical address. When the first program runs the related function corresponding to the complementary real function, the first device runs the small stub function, and writes a value into the physical address. After detecting that the value in the physical address is refreshed, the first device suspends running of the first program by using a processor, searches the complementary image for the complementary real function based on the small stub function and a correspondence, loads the complementary real function by using the loader, and completes the call of the first program to the complementary real function through redirection. In the method, the first device needs to monitor a refresh status of the physical address at all times, and the processor needs to promptly suspend the first program. Otherwise, the first program may consider the small stub function as the complementary real function to skip calling the complementary real function to cause an exception in a service of the first program.

It can be learned from the foregoing description in the program processing method that a second device retains the correspondence between a small stub function and a complementary real function. The correspondence may be a sequence number or a mapping table, or may be a function name of the small stub function and a function name of the complementary real function. If the correspondence is the sequence number, the first device may obtain a sequence number of the small stub function. When the complementary real function needs to be loaded by using the small stub function, the second device loads, in the complementary image by using the sequence number, the complementary real function whose sequence number is the same as the sequence number. If the correspondence is the mapping table, the first device further needs to obtain the mapping table. If the correspondence is the function name, the function name of the small stub function may be the same as or similar to the function name of the complementary real function.

It can be learned from the foregoing description in the program processing method that the second device replaces a source function in source code with a target function by using an "ID-based" method, and generates the target correspondence. Therefore, the small image and/or the complementary image obtained by using the source code include/includes the target function. After the first program runs the target function, the first device may obtain a target character string. The first device sends the target character string to the second device or another device, and the second device or the another device obtains a source character string by using the target correspondence and the target character string. If the character string is a log, a restored source character string is usually a language that is easy to read by a person. It should be noted that the target function may be a function in the small real function set, or may be a function in the complementary real function set. In other words, the target function may be the complementary real function. In another embodiment, the first device may also store the target correspondence. When the source character string needs to be read, the first device obtains the source character string based on the target correspondence and the target character string.

In a distributed scenario of another embodiment, the first device locally stores the small image 1, and the complementary image 1 is stored in the second device. The second device may be a cloud platform or a central device. The second device herein may be the second device in the foregoing program processing method, or the second device may not be the second device in the foregoing program processing method. When the first device needs to call the complementary real function in the complementary image, the first device calls the complementary real function from the cloud platform or the central device. This reduces costs of the first device. Further, the second device provides the complementary image 1 for a plurality of first devices, so that costs of the plurality of first devices can be reduced.

In another embodiment, the small image in this embodiment of this application is dynamically linked. The running memory of the first device is less occupied by the first program by using the dynamic link.

In another embodiment, after calling the complementary real function by using the program execution method in this embodiment of this application, the first device sends information related to the complementary real function to the second device or the another device, and the second device may update the small image and the complementary image based on a related image. A small image and a complementary image that are not updated are referred to as a first small image and a first complementary image, and a small image and a complementary image that are updated are referred to as a second small image and a second complementary image. Before the update, the complementary real function is in a complementary real function set of the first complementary image, and after the update, the complementary real function is in a small real function set of the second small image. In brief, the second device expands a size or a range of the small real function set, and reduces a size or a range of the complementary real function set.

The foregoing describes the program processing method and the program execution method in embodiments of this application, and the following describes a program processing apparatus and a program execution apparatus in embodiments of this application. FIG. 10 is a schematic diagram of a structure of a program execution apparatus according to an embodiment of this application.

The apparatus includes: a receiving module 1001, configured to receive a call request of a first program for a small stub function, where the small stub function is a function in a small stub function set, and the first small image includes the small stub function set and a small real function set;
a loading module 1002, configured to load the small stub function based on the call request; and
a processing module 1003, configured to determine, based on the small stub function, whether to load a complementary real function corresponding to the small stub function, where the complementary real function is a function in a complementary real function set, a first complementary image includes the complementary real function set and a complementary stub function set, the complementary stub function set corresponds to the small real function set, and the complementary real function set corresponds to the small stub function set.

In another embodiment, the apparatus may further include a first sending module, a second sending module, or the like. The modules in the apparatus are specifically configured to perform all or some of the operations that can be performed by the first device in the embodiment corresponding to FIG. 9.

FIG. 11 is a schematic diagram of a structure of a program processing apparatus according to an embodiment of this application.

The apparatus includes a sending module 1101, configured to send a first small image to a first device. The first small image includes a small real function set and a small stub function set, the small stub function set corresponds to a complementary real function set of a first complementary image, the small real function set corresponds to a complementary stub function set of the first complementary image, the small stub function set includes a small stub function, the small stub function is used by a first device to determine, based on the small stub function, whether to load a complementary real function corresponding to the small stub function, and the complementary real function set includes the complementary real function.

In another embodiment, the apparatus may further include a receiving module, a processing module, or the like. The modules in the apparatus are specifically configured to perform all or some operations that can be performed by the second device in the embodiment corresponding to FIG. 5 or FIG. 6.

The foregoing describes the program processing apparatus and the program execution apparatus in embodiments of this application, and the following describes the first device and the second device in embodiments of this application.

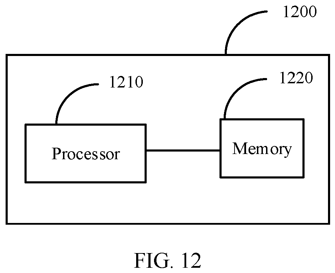

FIG. 12 is a schematic diagram of a structure of a first device or a second device according to an embodiment of this application.

As shown in FIG. 12, a program processing device or a program execution device 1200 includes a processor 1210 and a memory 1220 coupled to the processor 1210. The processor 1210 may be a central processing unit (central processing unit, CPU), a network processor (network processor, NP), or a combination of a CPU and an NP. The processor may alternatively be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The processor 1210 may be one processor, or may include a plurality of processors.

The memory 1220 in the foregoing embodiments may include a volatile memory (volatile memory), for example, a random-access memory (random-access memory, RAM). Alternatively, the memory 1220 may include a non-volatile memory (non-volatile memory), such as a read-only memory (read-only memory, ROM), a FRAM memory, a flash memory (flash memory), a hard disk drive (hard disk drive, HDD), or a solid-state drive (solid-state drive, SSD). Alternatively, the memory 1220 may include a combination of the foregoing types of memories.

When FIG. 12 is the schematic diagram of the structure of the program execution device,
the processor 1210 is configured to: receive a call request of a first program for a small stub function, where the small stub function is a function in a small stub function set, and the first small image includes the small stub function set and a small real function set; load the small stub function based on the call request; and determine, based on the small stub function, whether to load a complementary real function corresponding to the small stub function, where the complementary real function is a function in a complementary real function set, a first complementary image includes the complementary real function set and a complementary stub function set, the complementary stub function set corresponds to the small real function set, and the complementary real function set corresponds to the small stub function set.

In another embodiment, the processor 1210 is further configured to: after executing computer readable instructions in the memory 1220, perform, based on an indication of the computer readable instructions, all or some operations that can be performed by the first device, for example, an operation performed by the first device in the embodiment corresponding to FIG. 9.

When FIG. 12 is the schematic diagram of the structure of the program processing device,
the processor 1210 is configured to send a first small image to a first device. The first small image includes a small real function set and a small stub function set, the small stub function set corresponds to a complementary real function set of a first complementary image, the small real function set corresponds to a complementary stub function set of the first complementary image, the small stub function set includes a small stub function, the small stub function is used by a first device to determine, based on the small stub function, whether to load a complementary real function corresponding to the small stub function, and the complementary real function set includes the complementary real function.

In another embodiment, the processor 1210 is further configured to: after executing computer readable instructions in the memory 1220, perform, based on an indication of the computer readable instructions, all or some operations that can be performed by the second device, for example, an operation performed by the second device in the embodiment corresponding to FIG. 5 or FIG. 6.

In the several embodiments provided in this application, it should be understood that the disclosed systems, apparatuses, and methods may be implemented in other manners. For example, the described apparatus embodiments are merely examples. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of the software functional unit and is sold or used as an independent product, the integrated unit may be stored in a computer-readable storage medium. Based on such an understanding, the technical solutions of embodiments of this application essentially, or the part contributing to the conventional technology, all or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a flash drive, a removable hard disk, a ROM, a RAM, a magnetic disk, or an optical disc.

## Claims

1. A program execution method, applied to a computer system, wherein the computer system comprises a first small image, and the method comprises:
receiving a call request of a first program for a small stub function, wherein the small stub function is a function in a small stub function set, and the first small image comprises the small stub function set and a small real function set;
loading the small stub function based on the call request; and
determining, based on the small stub function, whether to load a complementary real function corresponding to the small stub function, wherein the complementary real function is a function in a complementary real function set, a first complementary image comprises the complementary real function set and a complementary stub function set, the complementary stub function set corresponds to the small real function set, and the complementary real function set corresponds to the small stub function set.

2. The method according to claim 1, wherein the determining whether to load a complementary real function based on the small stub function comprises:
attempting to run the small stub function according to an instruction of the first program, and if detecting an exception, loading the complementary real function.

3. The method according to claim 1 or 2, wherein the small real function set is a set of functions that are run by using target code in a process of running a target case set, and the complementary real function set is a set of functions that are not run by using the target code in the process of running the target case set.

4. The method according to claim 3, wherein the method further comprises:
loading a target function, wherein the target function comprises a target character string, a data volume of the target character string is less than a data volume of a source character string, the target code comprises the target function, the target code is obtained based on source code, the source code comprises a source function, and the source function comprises the source character string.

5. The method according to claim 4, wherein after the loading a target function, the method further comprises:
sending the target character string to a second device, wherein the target character string is used by the second device to obtain the source character string based on a target correspondence and the target character string.

6. The method according to any one of claims 2 to 5, wherein
the loading the complementary real function comprises:
loading the complementary real function from the second device based on the small stub function.

7. The method according to any one of claims 1 to 5, wherein the first complementary image and the first small image are stored in different storage media of a first device.

8. The method according to any one of claims 1 to 7, wherein the method further comprises:
if determining, based on the small stub function, to load the complementary real function, sending related information of the complementary real function to the second device, wherein the related information is used by the second device to obtain a second small image based on the related information, and the second small image comprises the small real function set and the complementary real function.

9. A program processing method, comprising:
sending, by a second device, a first small image to a first device, wherein the first small image comprises a small real function set and a small stub function set, the small stub function set corresponds to a complementary real function set of a first complementary image, the small real function set corresponds to a complementary stub function set of the first complementary image, the small stub function set comprises a small stub function, the small stub function is used by the first device to determine, based on the small stub function, whether to load a complementary real function corresponding to the small stub function, and the complementary real function set comprises the complementary real function.

10. The method according to claim 9, wherein the small stub function is specifically used by the first device to attempt to run the small stub function according to an instruction of a first program, and if an exception is detected, the complementary real function is loaded.

11. The method according to claim 9 or 10, wherein the small real function set is a set of functions that are run by using target code in a process of running a target case set, and the complementary real function set is a set of functions that are not run by using the target code in the process of running the target case set.

12. The method according to claim 11, wherein the target code comprises a target function, the target function comprises a target character string, a data volume of the target character string is less than a data volume of a source character string, the target code is obtained based on source code, the source code comprises a source function, and the source function comprises the source character string.

13. The method according to claim 12, wherein the target character string is used with a target correspondence to obtain the source character string.

14. The method according to any one of claims 9 to 13, wherein the first device stores the first small image, and the first small image and the first complementary image are stored in different devices.

15. The method according to any one of claims 9 to 13, wherein the first complementary image and the first small image are stored in different storage media of the first device.

16. The method according to any one of claims 9 to 15, wherein the method further comprises:
receiving, by the second device, related information that is of the complementary real function and that is sent by the first device; and
obtaining, by the second device, a second small image based on the related information, wherein the second small image comprises the small real function set and the complementary real function.

17. A program execution apparatus, wherein a computer system is installed in the apparatus, the computer system comprises a first small image, and the apparatus comprises:
a receiving module, configured to receive a call request of a first program for a small stub function, wherein the small stub function is a function in a small stub function set, and the first small image comprises the small stub function set and a small real function set;
a loading module, configured to load the small stub function based on the call request; and
a processing module, configured to determine, based on the small stub function, whether to load a complementary real function corresponding to the small stub function, wherein the complementary real function is a function in a complementary real function set, a first complementary image comprises the complementary real function set and a complementary stub function set, the complementary stub function set corresponds to the small real function set, and the complementary real function set corresponds to the small stub function set.

18. The apparatus according to claim 17, wherein the processing module is specifically configured to: attempt to run the small stub function according to an instruction of a first program, and if detecting an exception, load the complementary real function.

19. The apparatus according to claim 17 or 18, wherein the small real function set is a set of functions that are run by using target code in a process of running a target case set, and the complementary real function set is a set of functions that are not run by using the target code in the process of running the target case set.

20. The apparatus according to claim 19, wherein
the loading module is further configured to load a target function, wherein the target function comprises a target character string, a data volume of the target character string is less than a data volume of a source character string, the target code comprises the target function, the target code is obtained based on source code, the source code comprises a source function, and the source function comprises the source character string.

21. The apparatus according to claim 20, wherein the apparatus further comprises:
a first sending module, configured to send the target character string to a second device, wherein the target character string is used by the second device to obtain the source character string based on a target correspondence and the target character string.

22. The apparatus according to any one of claims 18 to 21, wherein
the processing module is specifically configured to load the complementary real function from the second device based on the small stub function.

23. The apparatus according to any one of claims 17 to 21, wherein the first complementary image and the first small image are stored in different storage media of the first device.

24. The apparatus according to any one of claims 17 to 23, wherein the apparatus further comprises:
a second sending module, configured to: if determining, based on the small stub function, to load the complementary real function, send related information of the complementary real function to the second device, wherein the related information is used by the second device to obtain a second small image based on the related information, and the second small image comprises the small real function set and the complementary real function.

25. A program processing apparatus, comprising:
a sending module, configured to send a first small image to a first device, wherein the first small image comprises a small real function set and a small stub function set, the small stub function set corresponds to a complementary real function set of a first complementary image, the small real function set corresponds to a complementary stub function set of the first complementary image, the small stub function set comprises a small stub function, the small stub function is used by the first device to determine, based on the small stub function, whether to load a complementary real function corresponding to the small stub function, and the complementary real function set comprises the complementary real function.

26. The apparatus according to claim 25, wherein the small stub function is specifically used by the first device to attempt to run the small stub function according to an instruction of a first program, and if an exception is detected, the complementary real function is loaded.

27. The apparatus according to claim 25 or 26, wherein the small real function set is a set of functions that are run by using target code in a process of running a target case set, and the complementary real function set is a set of functions that are not run by using the target code in the process of running the target case set.

28. The apparatus according to claim 27, wherein the target code comprises a target function, the target function comprises a target character string, a data volume of the target character string is less than a data volume of a source character string, the target code is obtained based on source code, the source code comprises a source function, and the source function comprises the source character string.

29. A program execution device, comprising a processor and a memory, wherein
the memory stores a first small image and an executable program, and the first small image comprises a small stub function; and
the processor is configured to: obtain the executable program from the memory, and process the small stub function based on the executable program, wherein a specific processing method comprises the method according to any one of claims 1 to 8.

30. A program processing device, comprising a processor and a memory, wherein
the memory stores a processing program; and
the processor is configured to: obtain the processing program from the memory, and obtain a first small image based on the processing program and source code, wherein a specific processing method comprises the method according to any one of claims 9 to 16.
